## Europäisches Patentamt

## European Patent Office

## Office européen des brevets

(11) Veröffentlichungsnummer: **0 096 732**
A2

(12) **EUROPÄISCHE PATENTANMELDUNG**

(21) Anmeldenummer: **83100998.0**

(22) Anmeldetag: **03.02.83**

(51) Int. Cl.³: **F 16 H 19/00**

(30) Priorität: **27.05.82 DE 3219972**

(43) Veröffentlichungstag der Anmeldung: **28.12.83**
**Patentblatt 83/52**

(84) Benannte Vertragsstaaten: **DE FR GB IT**

(71) Anmelder: **VDO Adolf Schindling AG, Gräfstrasse 103,
D-6000 Frankfurt/Main (DE)**

(72) Erfinder: **Horn, Martin, Egerländer Strasse 32,
D-6442 Rotenburg a.d.F. (DE)**

(74) Vertreter: **Könekamp, Herbert, Dipl.-Ing., Sodener
Strasse 9, D-6231 Schwalbach (DE)**

(54) **Wälzmuttergetriebe.**

(57) Die Erfindung bezieht sich auf ein Wälzmuttergetriebe (3) zur Umwandlung einer Drehbewegung in eine Vorschubbewegung. Es besitzt eine um ihre Längsachse drehbare Welle (2), auf der ein Paar Ringkörper (11, 12) größeren Innendurchmessers als des Wellendurchmessers angeordnet sind, wobei die Ringkörper (11, 12) mit ihrer Innenfläche an um 180° versetzten Stellen unter gleichgroßer Neigung entgegengesetzten Vorzeichens gegenüber der Drehachse (10) der Welle (2) in kraftschlüßiger Anlage an der Zylinderfläche der Welle (2) sind. Dabei befinden sich die Drehachse (10) der Welle (2) sowie die Anlagestellen (13 und 14) der Ringkörper (11 und 12) an der Welle (2) in einer Ebene. Um ein solches Wälzmuttergetriebe (3) so auszugestalten, daß es bei geringem Bauraum einen schlagfreien, ruhigen Antrieb gewährleistet, liegen die in der Ebene von Drehachse (10) und Anlagestellen (13 und 14) liegenden Querschnitte der Ringkörper (11 und 12) parallel zueinander und die Anlagestellen (13 und 14) auf einer zur Drehachse 10 rechtwinkligen Linie (22).

ACTORUM AG

VDO Adolf Schindling AG        - 1 -        Gräfstraße 103
6000 Frankfurt/Main

G-S Kl-do
B 1939
27.April 1982

## Wälzmuttergetriebe

Die Erfindung bezieht sich auf ein Wälzmuttergetriebe
zur Umwandlung einer Drehbewegung in eine Vorschubbewegung, mit einer um ihre Längsachse drehbaren Welle,
auf der ein Paar Ringkörper größeren Innendurchmessers
als des Wellendurchmessers angeordnet sind, wobei die
Ringkörper mit ihren Innenfläche an um 180° versetzten
Stellen unter gleich großer Neigung entgegengesetzten
Vorzeichens gegenüber der Drehachse der Welle in kraftschlüssiger Anlage an der Zylinderfläche der Welle sind,
und wobei sich die Drehachse der Welle sowie die Anlagestellen der Ringkörper an der Welle in einer Ebene befinden.

Bei derartigen Wälzmuttergetrieben besteht das Problem
der radialen Gegenabstützung der radialen Andruckkräfte,
mit denen ein Ringkörper von einer Seite her gegen die
Zylinderfläche der Welle beaufschlagt ist. Dieses Problem wird z.B. dadurch gelöst, daß man die Ringkörper

- 2 -

paarweise mit an gegenüberliegenden Seiten der Welle
befindlichen Anlagestellen anordnet.

Dies führt aber in einem bestimmten Umfang zu einer Verbiegung der Welle, was sich insbesondere bei hohen Drehantriebszahlen durch schlagende unruhige Umdrehungen der
Welle negativ bemerkbar macht. Darüber hinaus benötigt
diese Ausbildung einen relativ großen axialen Bauraum.

Es ist daher Aufgabe der Erfindung ein Wälzmuttergetriebe
nach dem Oberbegriff zu schaffen, das bei geringem Bauraum einen schlagfreien, ruhigen Antrieb gewährleistet.

Diese Aufgabe wird erfindungsgemäß dadurch gelöst, daß
die in der Ebene von Drehachse und Anlagestellen liegenden Querschnitte der Ringkörper parallel zueinander und
die Anlagestellen auf einer zur Drehachse rechtwinkligen
Linie liegen. Diese Ausbildung ermöglicht die Ringkörper
sehr dicht beieinander anzuordnen und somit den erforderlichen Bauraum zu minimieren. Dabei wird gleichzeitig
durch die sich rechtwinklig zur Drehachse gegenüberliegenden Anlagestellen der Ringkörper eine Biegebeanspruchung der Welle vermieden und somit ein schlagfreier
ruhiger Rundlauf der Welle erreicht. Diese Vorteile werden durch eine zweifache anstatt der bisher bekannten
einfachen Neigung der Ringkörper gegenüber der Drehachse
der Welle erzielt.

Geringe Energieverluste bei gleichzeitig erhöhter Haltekraft der Ringkörper auf der Welle werden dadurch erreicht, daß die Ringkörper im wesentlichen mit Linienberührung an der Welle in Anlage sind. Entgegen einer
vor sich hergeschobenen Bugwelle, die bei einer breitflächigen Anlage des Ringkörpers an der Welle entsteht,
und die in einem bestimmten Maß eine permanente Verformung der Zylinderoberfläche der Welle erfordert, führt die erfindungsgemäße Linienberührung durch geringfügiges Einschneiden zur Bildung einer Furche geringen Ausmaßes an der Zylinderfläche. In dieser einmal ausgebildeten Furche bewegt sich dann immer der Ringkörper und erhält seine Haltekraft an der Welle nicht nur durch Reibschluß, sondern in geringem Umfang auch zusätzlich durch Formschluß zwischen Ringkörper und Welle. Die axiale Belastungsmöglichkeit des Wälzmuttergetriebes wird dadurch noch erhöht.

Der Reibschluß zwischen Ringkörper und Welle wird dadurch erreicht, daß die Ringkörper federnd gegen die Welle vorgespannt sind, wobei vorzugsweise die Ringkörper in einem axial verschiebbar geführten Gehäuse angeordnet und durch am Gehäuse abgestütze Federn gegen die Welle vorgespannt sind. Diese Ausbildung läßt sich günstig als Baueinheit herstellen, deren Baugröße durch Verwendung von Tellerfedern besonders gering gehalten werden kann.

Die Federbeaufschlagung nur eines Ringkörpers und damit eine weitere Baugrößenverringerung wird ermöglicht, wenn der eine Ringkörper durch die Federn gegen die Welle beaufschlagt und der andere Ringkörper an der den Federn abgewandten Seite am Gehäuse abgestützt ist, wobei beide Ringkörper an den ihren Anlagestellen radial gegenüberliegenden Umfangsbereichen Bewegungsspiel besitzen.

Zur einwandfreien Beaufschlagung des Ringkörpers mit der Federkraft kann dabei zwischen Federn und Ringkörper ein im Gehäuse geführtes Druckstück angeordnet sein.

Auf einfache Weise werden die Ringkörper dadurch in ihrer korrekten Position zur Welle gehalten, daß sie in Führungsmulden des Gehäuses und/oder des Druckstücks eingesetzt sind.

Zur Verringerung von Reibverlusten können vorzugsweise die Ringkörper Wälzlagerringe sein.

Ein Ausführungsbeispiel der Erfindung ist in der Zeichnung dargestellt und wird im folgenden näher beschrieben. Es zeigen

Figur 1 einen Axialtrieb in der Seitenansicht mit einem Wälzmuttergetriebe im Längsschnitt

Figur 2 eine Schnittansicht von auf einer Welle angeordneten Ringkörpern

Figur 3 eine Draufsicht der Ringkörper nach Figur 2

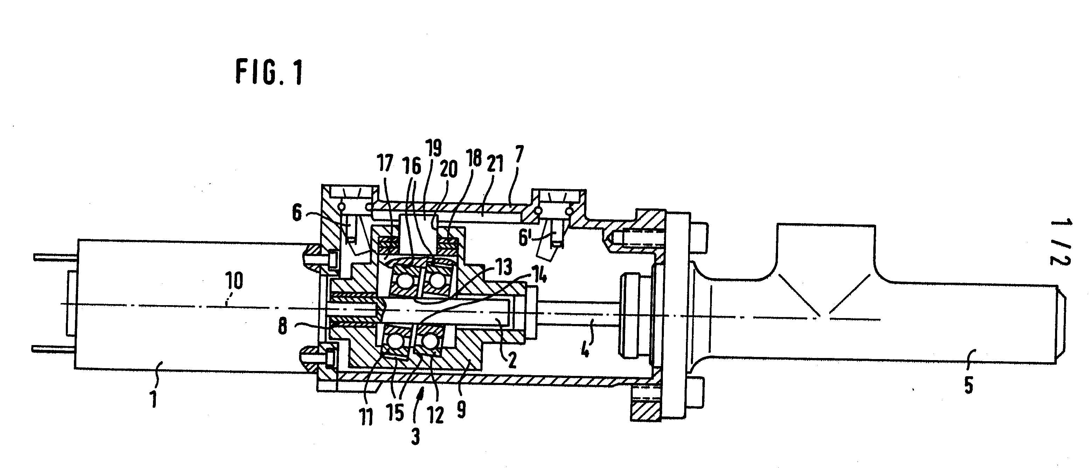

Der in Figur 1 dargestellte Axialtrieb besitzt einen Elektromotor 1 zum Drehantrieb der Welle 2. Auf der Welle 2 ist innerhalb eines Antriebsgehäuses 7 ein Wälzmuttergetriebe 3 angeordnet, durch das eine Kolbenstange 4 eines Hydraulikzylinders 5 axial bewegbar antreibbar ist.

Der axiale Bewegungsweg des Wälzmuttergetriebes 3 ist an seinen Enden jeweils durch einen Endschalter 6 bzw. 6' begrenzt, welcher durch Anschlagen des Wälzmuttergetriebes 3 betätigt wird und einen Stop sowie eine Drehrichtungsumkehr des Elektromotors 1 bewirkt.

Das Wälzmuttergetriebe 3 besteht aus einem über ein Gleitlager 8 auf der Welle 2 gelagerten Gehäuse 9, das gegen Verdrehen um die Drehachse 10 der Welle 2 gesichert, aber axial frei bewegbar ist. An seinem dem Elektromotor 1 abgewandten Ende ist das Gehäuse 9 mit der Kolbenstange 4 verbunden.

Innerhalb des Gehäuses 9 sind auf der Welle 2 zwei als
Wälzlagerringe ausgebildete Ringkörper 11 und 12 gegenüber der Drehachse 10 zweifach geneigt angeordnet. An
sich rechtwinklig zur Drehachse 10 gegenüberliegenden
Anlagestellen 13 und 14 liegen die Ringkörper 11 und 12
linienförmig mit ihrer Bohrungswand an der Zylinderfläche
der Welle 2 an.

In ihrer exakten Einbaulage in bezug auf die Neigung zur
Drehachse 10 sind die Ringkörper 11 und 12 durch Führungsmulden 15 und 16 gehalten, in denen sie in ihrer Ebene
etwa radial in Richtung zu den Anlagestellen 13 und 14
verschiebbar geführt sind. Dabei sind die Führungsmulden
15 im Gehäuse und die Führungsmulden 16 in einem Druckstück 17 ausgebildet.

Das Druckstück 17 ist radial am Gehäuse 9 geführt und
überträgt die Druckkraft von an ihm anliegenden am Gehäuse 9 abgestützten und unter Vorspannung angeordneten
Tellerfedern 18 radial auf den Ringkörper 11. Dadurch
wird der Ringkörper 11, der auf der dem Druckstück 17
abgewandten Seite radiales Spiel in seiner Führungsmulde
15 hat, auf der Seite des Druckstücks 17 an der Anlagestelle 13 gegen die Welle 2 gepreßt.

Gleichzeitig wird der Ringkörper 12, der auf der dem
Druckstück 17 gegenüberliegenden Seite radial im Gehäuse
9 abgestützt ist, über das als Zuganker wirkende Gehäuse
9 durch die Tellerfedern 18 an der Anlagestelle 14 gegen
die Welle 2 gepreßt. An seiner in dem Druckstück 17 ausgebildeten Führungsmulde 16 hat der Ringkörper 12 radiales
Spiel.

Die radiale Führung des Druckstücks 17 erfolgt durch einen daran ausgebildeten radial nach außen gerichteten Führungszapfen 19, der eine Radialbohrung 20 entsprechenden Durchmessers im Gehäuse 9 durchragt. Mit seinem radial aus dem Gehäuse 9 hervorstehenden Ende greift der Führungszapfen 19 in eine im Antriebsgehäuse 7 ausgebildete Längsnut 21 entsprechender Breite ein und bildet so die Verdrehsicherung des Wälzmuttergetriebes 3.

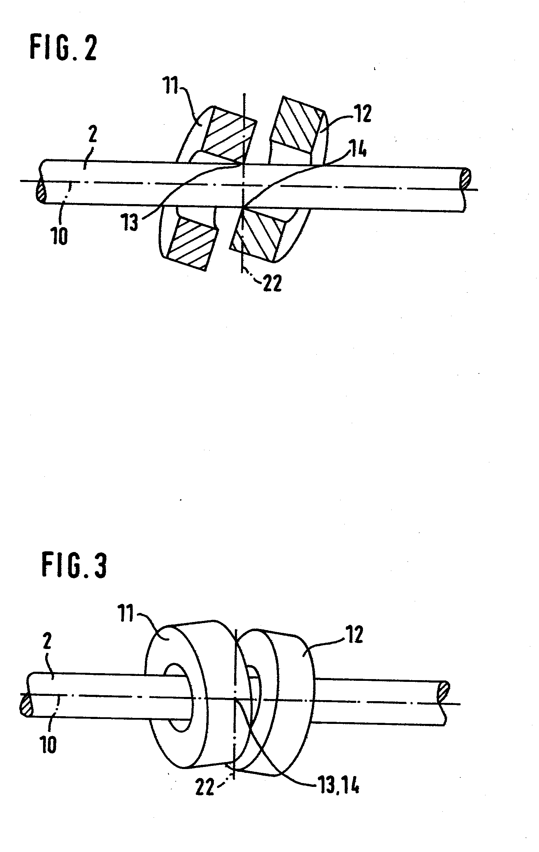

Die Ansicht der in Figur 1 dargestellten Ringkörper 11 und 12 entspricht der Darstellung in Figur 2. Dabei geht die Schnittebene sowohl durch die Drehachse 10 der Welle 2 als auch mittig durch die beiden sich gegenüberliegenden Anlagestellen 13 und 14. Die Querschnitte der beiden Ringkörper 11 und 12 sind in dieser Schnittebene zueinander parallel derart zur Drehachse 10 geneigt, daß die Anlagestellen 13 und 14 auf eine zur Drehachse 10 rechtwinkligen Linie 22 liegen. Damit sind die radial gerichteten Anpreßkräfte, mit denen die Ringkörper 11 und 12 an der Welle 2 aufliegen, einander entgegen gerichtet und heben sich aufgrund gleicher Größe derart auf, daß kein Drehmoment auf die Welle 2 wirkt.

Wie aus den Figuren 2 und 3 zu erkennen ist, sind die Ringkörper 11 und 12 weiterhin derart um eine durch die Linie 22 gebildete Achse geschwenkt, daß sie mit ihrer Berührungslinie an den Anlagestellen 13 und 14 unter gleichem Winkel aber in entgegengesetzter Richtung gegenüber der Drehachse 10 geneigt sind. Somit liegen beide Ringkörper 11 und 12 mit gleichem Steigungswinkel an der Zylinderfläche der Welle 2 an. Dieser Steigungswinkel bewirkt den axialen Antrieb des Wälzmuttergetriebes 3 bei sich drehender Welle 2. Die Axialbewegung des Wälzmuttergetriebes 3 wird auf die daran befestigte Kolbenstange 4 übertragen, die dadurch mit einem an ihr angeordneten, nicht dargestellten Kolben einen Druck im Hydraulikzylinder 5 erzeugen kann.

VDO Adolf Schindling AG        - 1 -        Gräfstraße 103
6000 Frankfurt/Main

G-S Kl-do
B 1939
27.April 1982

## Patentansprüche

1. Wälzmuttergetriebe zur Umwandlung einer Drehbewegung in einer Vorschubbewegung, mit einer um ihre Längsachse drehbaren Welle, auf der ein Paar Ringkörper größeren Innendurchmessers als des Wellendurchmessers angeordnet sind, wobei die Ringkörper mit ihrer Innenfläche an um 180° versetzten Stellen unter gleichgroßer Neigung entgegengesetzten Vorzeichens gegenüber der Drehachse der Welle in kraftschlüssiger Anlage an der Zylinderfläche der Welle sind und wobei sich die Drehachse der Welle sowie die Anlagestellen der Ringkörper an der Welle in einer Ebene befinden, dadurch gekennzeichnet, daß die in der Ebene von Drehachsen (10) und Anlagestellen (13, 14) liegenden Querschnitte der Ringkörper (11, 12) parallel zueinander und die Anlagestellen (13, 14) auf einer zur Drehachse (10) rechtwinkligen Linie (22) liegen.

2. Wälzmuttergetriebe nach Anspruch 1, dadurch gekennzeichnet, daß die Ringkörper (11, 12) im wesentlichen mit Linienberührung an der Welle (2) in Anlage sind.

3. Wälzmuttergetriebe nach einem der vorhergehenden Ansprüche, dadurch gekennzeichnet, daß die Ringkörper (11, 12) federnd gegen die Welle (2) vorgespannt sind.

4. Wälzmuttergetriebe nach Anspruch 3, dadurch gekennzeichnet, daß die Ringkörper (11, 12) in einem axial verschiebbar geführten Gehäuse (9) angeordnet und durch am Gehäuse (9) abgestützte Federn (18) gegen die Welle (2) vorgespannt sind.

5. Wälzmuttergetriebe nach Anspruch 4, dadurch gekennzeichnet, daß der eine Ringkörper (11) durch die Federn (18) gegen die Welle (2) beaufschlagt und der andere Ringkörper (12) an der den Federn (18) abgewandten Seite am Gehäuse (9) abgestützt ist, wobei beide Ringkörper (11, 12) an den ihren Anlagestellen (13, 14) radial gegenüberliegenden Umfangsbereichen Bewegungsspiel besitzen.

6. Wälzmuttergetriebe nach einem der vorhergehenden Ansprüche, dadurch gekennzeichnet, daß zwischen Federn (18) und Ringkörper (11, 12) ein im Gehäuse (9) geführtes Druckstück (17) angeordnet ist.

7. Wälzmuttergetriebe nach einem der vorhergehenden Ansprüche, dadurch gekennzeichnet, daß die Ringkörper (11, 12) in Führungsmulden (15, 16) des Gehäuses (9) und/oder des Druckstücks (17) eingesetzt sind.

8. Wälzmuttergetriebe nach einem der vorhergehenden An- sprüche, <u>dadurch gekennzeichnet</u>, daß die Ringkörper (11, 12) Wälzlagerringe sind.

0096732

FIG. 1

FIG. 2

FIG. 3